# EUROPÄISCHE PATENTSCHRIFT

(11) **EP 2 620 307 B1**
(45) Veröffentlichungstag und Bekanntmachung des Hinweises auf die Patenterteilung: **19.03.2014**
(21) Anmeldenummer: 12152885.5
(22) Anmeldetag: 27.01.2012
(51) Int. Cl.: B60J 5/06

(54) **Nutzfahrzeugaufbau mit in Laufschiene gehaltenem Laufwagen**
Commercial vehicle structure with carriage held in guide rail
Structure de camion avec un chariot retenu dans un rail de guidage

(43) Veröffentlichungstag der Anmeldung: 31.07.2013
(73) Patentinhaber: Schmitz Cargobull AG, 48341 Altenberge (DE)
(72) Erfinder: Dahlhaus, Andreas, 48712 Gescher (DE); Beelmann, Reinhard, 43721 Haltern am See (DE)
(74) Vertreter: Cohausz & Florack

(56) Entgegenhaltungen:
- EP-A1- 0 882 614
- EP-A2- 1 867 509
- FR-A1- 2 829 090

## Beschreibung

Die Erfindung betrifft ein Nutzfahrzeugaufbau mit einem Dach und einer dem Dach zugeordneten Laufschiene gemäß dem Oberbegriff von Anspruch 1.

Nutzfahrzeugaufbauten der genannten Art sind bereits in verschiedenen Ausgestaltungen bekannt, z.B. in der FR 2829090. Als Nutzfahrzeugaufbauten im vorliegenden Sinne kommen insbesondere Planenaufbauten oder Kofferaufbauten von Lastkraftwagen, Anhängern, Sattelaufliegern oder Wechselbrücken in Betracht.

Unter einem Kofferaufbau wird dabei ein Nutzfahrzeugaufbau mit festen Wänden in der Form eines geschlossenen Kastens angesehen. Bei sogenannten Kühlkofferaufbauten werden die Wände durch Sandwichpaneele gebildet, die äußere Decklagen und dazwischen einen geschäumten Kunststoff zur Isolation des Laderaums aufweisen. Im Unterschied zum Kofferaufbau wird der Laderaum beim Planenaufbau durch eine Plane verschlossen, die typischerweise von einer Rahmenkonstruktion getragen wird, welche Holme, Spriegel und Rungen umfasst. Unter einer Wechselbrücke versteht man einen austauschbaren Ladungsträger, der sich ähnlich wie ein ISO-Container vom Trägerfahrzeug trennen lässt. Im Unterschied zu einem ISO-Container weist eine Wechselbrücke jedoch Beine auf, die ausgeklappt oder ausgefahren werden können, um die Wechselbrücke im abgeladenen Zustand in einer erhöhten Position zu halten und so vom Trägerfahrzeug unterfahrbar zu machen.

In entsprechenden Nutzfahrzeugaufbauten kann dem Dach eine Laufschiene mit einem darin geführten Laufwagen zugeordnet sein, um an dem Laufwagen gehaltene Lasten entlang der Laufschiene verschieben zu können. Damit der Laufwagen ohne großen Kraftaufwand entlang der Laufschiene verfahren werden kann, weist der Laufwagen wenigstens eine Laufrolle auf, welche mit ihrer Lauffläche an einer Lauffläche der Laufschiene abrollt.

An den Laufwagen angehängte Lasten können beispielsweise Seitenwände zum Öffnen des Nutzfahrzeugaufbaus oder Trennwände zum Unterteilen des Laderaums sein. Ein entsprechender Nutzfahrzeugaufbau ist beispielsweise aus der DE 200 16 089 U1 bekannt. Es kann sich aber auch um Halteeinrichtungen zum Anhängen von Ladung, etwa sogenannte Fleischhangsysteme zum Transport von Tierhälften, handeln. An den Laufwagen können aber auch Ausstattungselemente, etwa Kühlaggregate oder dergleichen, aufgehängt sein.

Die Ausgestaltung von Laufschiene und Laufwagen kann je nach Einzelfall variieren. Grundsätzlich besteht jedoch das Bestreben nach einer möglichst platzsparenden und einfachen Ausgestaltung derselben mit einer geringen Zahl an erforderlichen Einzelteilen. Typischerweise kommen dabei Rollen und Laufschienen in der in der DE 200 16 089 U1 beschriebenen Art zum Einsatz. Die Rollen weisen vergleichsweise breite Laufflächen auf, die auf einer ebenen Lauffläche der Laufschiene abrollen, um die auftretenden Kräfte zuverlässig abzuleiten und über die Lebensdauer des Nutzfahrzeugaufbaus einen sicheren und zuverlässigen Betrieb gewährleisten zu können. Zudem sind die Laufrollen der Laufwagen so an die Laufschienen adaptiert, dass von der Laufschiene über die Laufrollen in unterschiedlichen Raumrichtungen übertragene Kräfte aufgenommen werden können.

Wenn die vom Laufwagen getragene Last wenigstens in geringem Maße pendelnd am Laufwagen aufgehängt ist, kann beim Verfahren des Laufwagens, insbesondere bei einer unpräzisen Handhabung der am Laufwagen hängenden Last, ein Moment auf den Laufwagen übertragen werden, welches zu einem Verdrehen des Laufwagens um die Längsachse der Laufschiene führt. Dadurch kann es bei den bekannten Systemen aus Laufwagen und Laufschiene zu einem Verkeilen oder Verklemmen des Laufwagens in der Laufschiene kommen. Somit wird das Verschieben der an dem Laufwagen anhängenden Last schwergängiger, so dass der Benutzer eine größere Kraft für das Verschieben des Laufwagens aufbringen muss. Dies kann aber zu einem weiteren Ansteigen des Moments beitragen und ein weiteres Verschieben des Laufwagens entlang der Laufschiene gänzlich verhindern. Durch die erhöhten, auf den Laufwagen und die Laufschiene einwirkenden Kräfte, kann es auch zu Beschädigungen dieser Bauteile kommen.

Der vorliegenden Erfindung liegt daher die Aufgabe zu Grunde, den eingangs genannten und zuvor näher beschriebenen Nutzfahrzeugaufbau derart auszugestalten und weiterzubilden, dass bei wenigstens in geringem Maße pendelnd an dem Laufwagen angehängten Lasten die vorgenannten Probleme wenigstens vermindert werden.

Diese Aufgabe ist bei einem Nutzfahrzeugaufbau der oben genannten Art durch die Merkmale des kennzeichens von Anspruch 1 gelöst.

Die Erfindung hat erkannt, dass bei entsprechender Ausgestaltung von Laufrolle und Laufschiene eine problemlose Führung eines Laufwagens in einer Laufschiene auch für den Fall erreicht werden kann, dass auf den Laufwagen ein Moment senkrecht zur Längserstreckung der Laufschiene aufgeprägt wird. Der Laufwagen kann durch die ballige Ausgestaltung der Lauffläche der wenigstens einen Laufrolle und die wenigstens in etwa korrespondierend ausgebildete und mit der Laufrolle zusammenwirkende Lauffläche der Laufschiene problemlos in einem gewissen Maße ausgelenkt werden. Es ist nicht erforderlich durch besondere konstruktive Einrichtungen eine Versteifung des Systems aus Laufschiene und Laufwagen herbeizuführen, die eine entsprechende Auslenkung des Laufwagens verhindert. Es kommt aber auch nicht zu nachteiligen Betriebszuständen des Laufwagens in der Laufschiene.

Beispielsweise wird trotz eines Verkippens der Laufrolle infolge des Moments weiter eine verhältnismäßig breite Aufstandfläche der Laufrolle erreicht. Unter einem Verkippen wird dabei insbesondere eine Auslenkung der Laufrolle gegenüber einer Ausgangslage verstanden. Diese Auslenkung kann in einem erheblichen Winkelbereich erfolgen, und zwar alternativ oder zusätzlich zu beiden Seiten der Laufrolle.

Erfindungsgemäß treten zudem keine erhöhten Belastungen im Kantenbereich der Laufrolle auf, wie dies bei Laufrollen mit planer Lauffläche der Fall ist. Die erhöhten Belastungen könnten nämlich zu Beschädigungen an den Laufrollen führen. Durch die umlaufende Abrundung der Laufrolle infolge der konvexen Kontur der Lauffläche wird zudem vermieden, dass die Laufrolle auch in engen Laufschienen in schleifenden Kontakt mit der Laufschiene gelangt, wenn sich die Laufrolle infolge des Moments etwas zu einer Seite neigt. Zudem kann durch die Ausgestaltung der Laufrolle im Falle von sehr engen Laufschienen ein Verkeilen der Laufrolle in der Laufschiene vermieden werden, auch wenn sich die Laufrolle infolge des Moments um einen gewissen Winkel schräg stellt.

Die Lauffläche der Laufrolle steht in der Mitte nach außen vor und bildet so eine nach außen gewölbte, d. h. konvexe, Kontur. Die Lauffläche der Laufschiene an der die entsprechende Laufrolle abrollt, ist dementsprechend ebenfalls nach außen gewölbt, und zwar gesehen von der Laufrolle. Die nach außen gewölbte Kontur der Laufschiene stellt jedoch bezogen auf die Laufschiene eine konkave Kontur dar. Die beiden nach außen gewölbten Konturen sind einander wenigstens ähnlich, um vorzugsweise eine breite Auflagefläche der Laufrolle auf der Laufschiene zu erreichen. Dabei ist eine Identität der Konturen zwar in vielen Fällen bevorzugt, aber keinesfalls als zwingend anzusehen.

Die Laufschiene kann aus unterschiedlichen Materialien gefertigt sein. Um die Laufschiene als Strangpressprofil ausbilden zu können, kann als Material Aluminium bevorzugt sein. Eine höhere Steifigkeit kann jedoch bedarfsweise bei Verwendung einer Laufschiene aus Stahl erreicht werden, während sich bedarfsweise Gewichtsvorteile oder eine einfachere Fertigung erreichen lassen, wenn die Laufschiene aus Kunststoff gefertigt ist. Die genannten Materialien können auch zur Fertigung des Laufwagens und der Laufrollen verwendet werden. In Bezug auf den Laufwagen kann im Falle von Aluminium eine Gewichtseinsparung gegenüber Stahl erreicht werden, wobei Stahl jedoch höhere mechanische Belastungen zulässt. Die Verwendung von Kunststoff kann dagegen die Fertigung des Laufwagens erleichtern. Sind die Laufrollen dagegen wenigstens auch aus Kunststoff, kann ein hoher Abrollkomfort erreicht werden. Laufrollen, die wenigstens auch aus Stahl gefertigt sind, können dagegen höheren mechanischen Belastungen standhalten. Aluminium oder andere Metalle mit einer geringeren Härte ermöglichen bedarfsweise einen guten Kompromiss zwischen den Abrolleigenschaften und der Langlebigkeit.

Bei einer ersten bevorzugten Ausgestaltung des Nutzfahrzeugaufbaus ist die wenigstens eine Laufrolle so an die Laufschiene angepasst, dass die Lauffläche der Laufrolle an zwei Laufflächen der Laufschiene abrollend vorgesehen ist. Dabei können die beiden Laufflächen der Laufschiene bezogen auf die Laufrolle einander gegenüberliegend angeordnet sein. Die wenigstens eine Laufrolle kann folglich durch die Anlage an beide Laufflächen der Laufschiene in Position gehalten werden, und zwar beispielsweise in einem Spalt, der durch die beiden Laufflächen der Laufschiene gebildet wird und im Wesentlichen eine Breite aufweist, die dem Durchmesser der Laufrolle entspricht.

Um ein Blockieren der Laufrolle in der Laufschiene zu vermeiden, kann zwischen der Laufrolle und wenigstens einer Lauffläche der Laufschiene ein geringer Spalt vorgesehen sein, etwa derart, dass die Laufrolle geringfügig schmaler ist als die Breite des mittels der Laufflächen definierten Spalts. Es bedarf jedoch lediglich einer minimalen Auslenkung der Laufrolle bzw. des Laufwagens um die Laufrolle von einer Lauffläche in Anlage mit der weiteren Lauffläche zu bringen. Ein gleichzeitiges Abrollen der Laufrolle an beiden Laufflächen der Laufschiene ist also nicht zwingend erforderlich.

Besonders bevorzugt ist es in diesem Zusammenhang, wenn die Lauffläche der wenigstens einen Laufrolle und die mit dieser Lauffläche zusammenwirkenden Laufflächen der Laufschiene im Wesentlichen korrespondierend zueinander nach außen gewölbte Konturen aufweisen. Die Konturen können in der bereits beschriebenen Art ausgebildet sein. Egal an welcher Lauffläche der Laufschiene die Laufrolle abrollt, kann der Laufwagen so problemlos ein Moment aufnehmen, das zu einem Verkippen und/oder einer Auslenkung der Laufrolle führen kann, ohne dass die Verfahrbarkeit der Laufrolle entlang der Laufschiene übermäßig beeinträchtigt wird. Zudem muss auch in einer verkippten und/oder ausgelenkten Stellung der Laufrolle diese nur minimal bewegt werden, um von der Anlage an eine Lauffläche in Anlage an die andere Lauffläche zu gelangen. Der Betrag dieser Bewegung ist dabei vorzugsweise im Wesentlichen identisch mit der entsprechenden Auslenkung in der Ausgangsstellung. Es macht für den Wechsel der Laufrolle zwischen den Laufflächen also vorzugweise keinen nennenswerten Unterschied, ob sich die Laufrolle in der Ausgangsstellung oder in einer verkippten und/oder ausgelenkten Stellung befindet.

Erfindungsgemäß weist der Laufwagen wenigstens zwei Laufrollen auf, wobei jede Laufrolle an jeweils wenigstens einer Lauffläche der Laufschiene abrollt. Die jeweiligen Laufflächenpaare sind dabei im Wesentlichen korrespondierend zueinander ausgebildet. Die Laufflächen weisen dabei stets nach außen gewölbte Konturen auf. Die zuvor beschriebenen Vorteile können so auch bei Laufwagen erhalten werden, die mehrere Laufrollen aufweisen.

Erfindungsgemäß sind die Drehachsen der wenigstens zwei Laufrollen des Laufwagens gegeneinander geneigt, so dass über eine Mehrzahl von Rollen eine Führung des Laufwagens in unterschiedlichen Raumrichtungen erfolgen kann. Gleichzeitig können Kräfte in unterschiedliche Raumrichtungen vom Laufwagen aufgenommen und an die Laufschiene abgegeben werden. Es ist in diesem Zusammenhang bevorzugt, wenn die Drehachsen der wenigstens zwei Laufrollen um etwa 90° gegeneinander geneigt sind. So kann eine Führung und Kraftübertragung in unterschiedlichen Raumrichtungen jeweils über unterschiedliche Laufrollen bewerkstelligt werden.

Um dennoch die Gewichtskräfte der an dem Laufwagen angehängten Last gleichmäßig über zwei Laufrollen und über eine breite Aufstandsfläche der Laufrollen an die Laufschiene übertragen zu können, ohne dass es dazu weiterer Laufrollen bedarf, können die wenigstens zwei Laufrollen in einer Ausgangsstellung, in der vorzugsweise kein Moment auf den Laufwagen wirkt, jeweils etwa 45° gegen die Vertikale geneigt sein.

Eine besonders kompakte Ausgestaltung des Systems aus Laufschiene und Laufwagen kann erhalten werden, wenn die Laufschiene einen im Wesentlichen kreisförmigen, inneren Querschnitt aufweist. Dabei kann wenigstens die eine Lauffläche, vorzugsweise alle Laufflächen, der Laufschiene auf diesem inneren Querschnitt angeordnet sein.

Wenn zudem die Krümmung des inneren Querschnitts und die Krümmung der Kontur der wenigstens einen Lauffläche der Laufschiene, vorzugsweise aller Laufflächen, im Wesentlichen identisch sind, kann der Laufwagen in der Laufschiene infolge eines Moments problemlos über einen besonders weiten Winkelbereich ausgelenkt werden.

Es kann beispielsweise vorgesehen sein, dass der im Wesentlichen kreisförmige, innere Querschnitt der Laufschiene die Laufflächen der Laufschiene definiert. Die Laufflächen der Laufschiene können also im Wesentlichen Kreisbögen des inneren Querschnitts entsprechen. Alternativ oder zusätzlich kann der kreisförmige innere Querschnitt durch Kreisbögen definiert sein, die in etwa den Laufflächen der Laufrollen entsprechen. Dies ermöglicht in beiden Fällen die Verwendung einer konstruktiv einfach zu fertigenden Laufschiene. Es kann sogar der gesamte innere Querschnitt als Lauffläche zur Verfügung stehen, je nach dem inwieweit der Laufwagen infolge eines Moments aus seiner Ausgangsstellung ausgelenkt werden kann. Dies kann bedeuten, dass der Grad der möglichen Auslenkung nicht durch die Anordnung des Laufwagens in der Laufschiene bestimmt wird, was höhere Freiheitsgrade bei der Bedienung des Nutzfahrzeugaufbaus und bei dessen Konstruktion eröffnet.

Insbesondere wenn die Laufschiene einen kreisförmigen, inneren Querschnitt aufweist, kann der Mittelpunkt der wenigstens einen Laufrolle, vorzugsweise aller Laufrollen, des Laufwagens im Wesentlichen auf der Mittellinie der Laufschiene angeordnet sein. Ein Verkippen des Laufwagens bzw. der wenigstens einen Laufrolle infolge eines über die angehängte Last auf den Laufwagen einwirkenden Moments führt dann vorzugsweise lediglich zu einem Verdrehen des Laufwagens oder der wenigstens einen Laufrolle, ohne dass der Laufwagen als solches seitlich ausgelenkt wird und/oder in der Laufschiene verkanten kann.

Damit der Laufwagen ausreichend steif ist, ohne die Konstruktion und Herstellung des Laufwagens übermäßig zu verkomplizieren, kann im Laufwagen wenigstens eine schlitzförmige Aussparung zur Aufnahme einer Laufrolle vorgesehen sein. Vorzugsweise sind mehrere, wenn nicht gar alle Laufrollen in entsprechenden schlitzförmigen Aussparungen aufgenommen. Die schlitzförmigen Aussparungen können von dem Laufwagen in wenigstens einer Ebene vollständig umschlossen sein oder eine nach außen offene Seite aufweisen. Die schlitzförmigen Aussparungen können auch dem Schutz der Laufrollen vor äußeren mechanischen Einflüssen dienen.

Um das Aufhängen der Last am Laufwagen zu erleichtern und/oder die Last möglichst stabil an dem Laufwagen aufhängen zu können, kann die Laufschiene eine im Wesentlichen vertikal nach unten weisende, sich längs zur Laufschiene erstreckende Öffnung aufweisen. Die Öffnung ist dabei vorzugsweise schlitzförmig ausgebildet, um die Stabilität der Laufschiene nicht zu sehr zu beeinträchtigen und verhältnismäßig breite Laufflächen der Laufschiene bereitstellen zu können. In der Öffnung kann dann ein Verbindungselement aufgenommen sein, über das die an dem Laufwagen angehängte, außerhalb der Laufschiene vorgesehene Last mit dem Laufwagen verbunden ist. Wenn die Öffnung der Laufschiene im Wesentlichen vertikal nach unten weist kann zudem die Last so am Laufwagen montiert werden, dass die Last in der Ausgangsstellung ein möglichst geringes Moment auf den Laufwagen ausübt.

Grundsätzlich ist es bevorzugt, wenn die wenigstens eine Laufschiene in oder an einem seitlichen, sich vorzugsweise längs zum Nutzfahrzeugaufbau erstreckenden, Dachholm vorgesehen ist. Auf diese Weise können beispielsweise Seitenwände eines Kofferaufbaus oder Seitenplanen eines Planenaufbaus an dem wenigstens einen, der Laufschiene zugeordneten Laufwagen längsverschieblich zum Nutzfahrzeugaufbau vorgesehen sein. Insbesondere im Zusammenhang mit einer Faltwand, deren einzelne Elemente über eine Mehrzahl von Laufwagen in einer entsprechenden Laufschiene gehalten sind, kommen die beschriebenen Vorzüge der besonderen Ausgestaltung der Laufflächen zum Tragen. Die wenigstens eine Laufschiene kann alternativ oder zusätzlich auch im Laderaum und/oder angrenzend zum Laderaum des Nutzfahrzeugs vorgesehen sein. Dann kann an den Laufwagen eine Ladung oder Ausstattungseinrichtung des Nutzfahrzeugs angehangen werden. Besonders in diesem Falle kann es bevorzugt sein, wenn die Laufschiene in das Dachpaneel eines Kofferaufbaus eingelassen ist. Dies stellt nämlich eine platzsparende Lösung dar, welche auch das Be- und Entladen des entsprechenden Nutzfahrzeugs nicht behindert. Dies gilt umso mehr, wenn die Laufschiene bündig in das Dachpaneel eines Kofferaufbaus eingelassen ist.

Die Erfindung wird nachfolgend anhand einer lediglich ein Ausführungsbeispiel darstellenden Zeichnung näher erläutert. In der Zeichnung zeigt
- Fig. 1: einen Sattelauflieger mit einem erfindungsgemäßen Kofferaufbau in einer perspektivischen Ansicht,
- Fig. 2: ein Detail des Kofferaufbaus aus Fig. 1 mit geöffneter Rückwand und Seitenwand in einer perspektivischen Ansicht,
- Fig. 3: den Laufwagen des Kofferaufbaus aus Fig. 1 in perspektivischer Ansicht.
- Fig. 4: die Laufschiene des Kofferaufbaus aus Fig. 1 mit einem Laufwagen in einer Schnittansicht in einer Blickrichtung von unten und
- Fig. 5: die Laufschiene des Kofferaufbaus aus Fig. 1 mit einem Laufwagen in einer Schnittansicht quer zur Laufschiene.

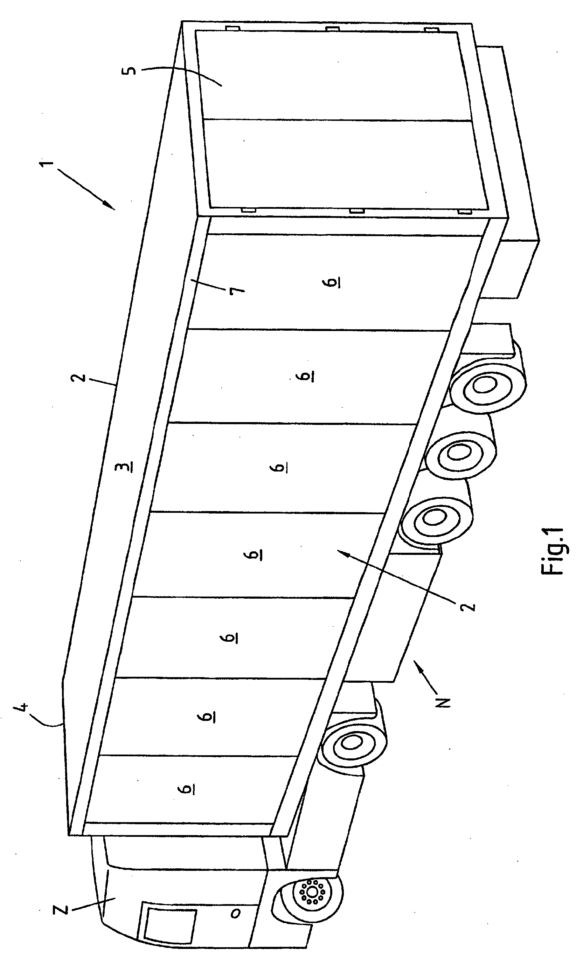

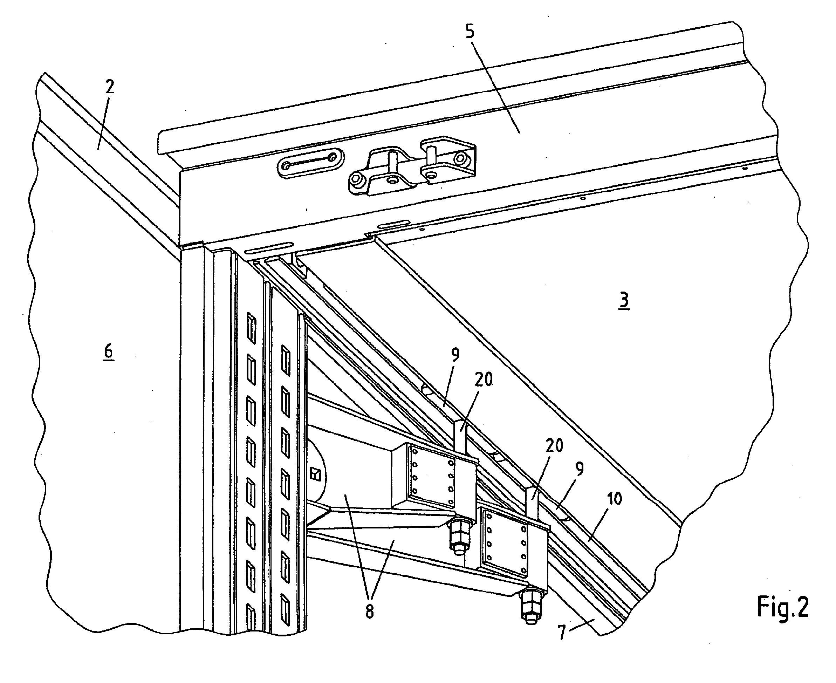

In der Fig. 1 ist ein Nutzfahrzeug N in Form eines Sattelaufliegers dargestellt, der an eine Zugmaschine Z angekuppelt ist. Das Nutzfahrzeug N trägt einen Nutzfahrzeugaufbau 1 in Form eines Kofferaufbaus umfassend zwei Seitenwände 2, ein Dach 3, eine Stirnwand 4 und eine Rückwand 5. Beim dargestellten und insoweit bevorzugten Nutzfahrzeugaufbau 1 ist eine der Seitenwände 2 als sogenannte Faltwand ausgebildet, die aus separaten Paneelen 6 zusammengesetzt ist. Die separaten Paneele 6 werden vom Dachholm 7 getragen, der auf der Seite der Faltwand angeordnet ist und sich längs des Nutzfahrzeugaufbaus 1 erstreckt. Dies ist insbesondere in der Fig. 2 dargestellt, in der der Nutzfahrzeugaufbau 1 der Fig. 1 in einem Zustand darstellt, in dem sowohl die Rückwand 5 als auch die Seitenwand 2 geöffnet sind, um den Laderaum des Nutzfahrzeugaufbaus 1 zum Be- und Entladen zugänglich zu machen.

Die einzelnen Paneele 6 der Seitenwand sind über Tragarme 8 mit den Laufwagen 9 verbunden, welche in einer Laufschiene 10 des Dachholms 7 gehalten und entlang der Laufschiene 10 in Längsrichtung des Nutzfahrzeugaufbaus 1 verschiebbar geführt sind. Zum Öffnen der Seitenwand 2 des Nutzfahrzeugaufbaus 1 werden die Paneele 6 der Faltwand aufgeschwenkt und in Längsrichtung des Nutzfahrzeugsaufbaus 1 zur Stirnwand 4 oder zur Rückwand 5 verschoben.

Das Dach 3, die Stirnwand 4 und die Rückwand 5 des dargestellten und insoweit bevorzugten Nutzfahrzeugaufbaus 1 sind ebenso wie die Paneele 6 von dessen Faltwand als Sandwichpaneele ausgebildet. Die Sandwichpaneele weisen zwei äußere Decklagen und eine dazwischen angeordnete, isolierende Kernschicht auf. Während die äußeren Decklagen aus Blech oder als Verbundstoffbauteil ausgebildet sind, wird die Kernschicht durch einen geschäumten Kunststoff gebildet.

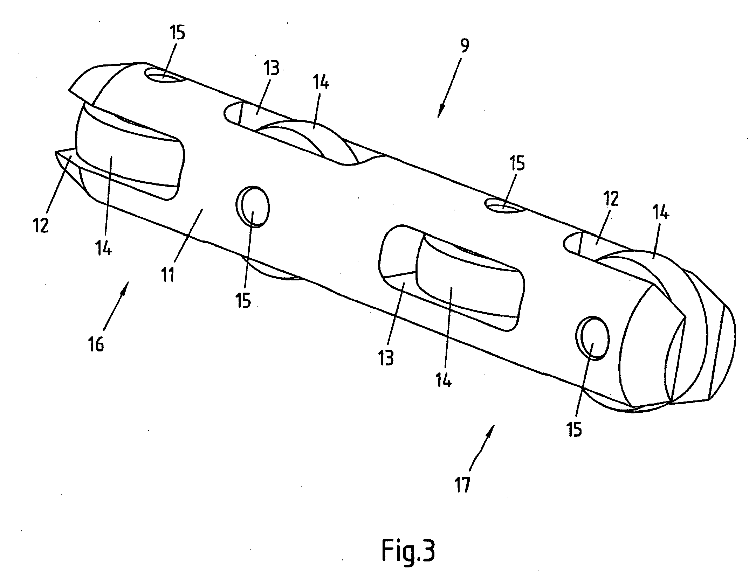

Die Laufwagen 9, über die die Paneele 6 der Seitenwand 2 am Dachholm 7, insbesondere an der dort vorgesehenen Laufschiene 10, aufgehängt sind, haben eine längliche Gestalt. Der in der Fig. 3 dargestellte und insoweit bevorzugte Laufwagen 9 weist einen zigarrenförmigen Grundkörper 11 auf, in dem schlitzförmige Aussparungen 12,13 zur Aufnahme von Laufrollen 14 vorgesehen sind. Dabei sind zwei schlitzförmige Aussparungen 12 an den Längsenden des Grundkörpers 11 vorgesehen, die in Richtung des jeweiligen Längsendes offen und somit nutartig ausgebildet sind. Ferner sind versetzt zur Mitte des Grundkörpers 11 zwei weitere schlitzartige Aussparungen 13 vorgesehen, in denen ebenfalls jeweils eine Laufrolle 14 aufgenommen ist. Die beiden inneren schlitzförmigen Aussparungen 13 werden vom Grundkörper 11 in jeweils einer Ebene vollständig umschlossen, wobei die beiden entsprechenden Ebenen etwa senkrecht zueinander angeordnet sind.

Jede Laufrolle 14 ist über eine Achse 15 am Grundkörper 11 des Laufwagens 9 festgelegt, die in Form eines Bolzens ausgebildet ist und senkrecht zur jeweiligen Aussparung 12,13 diese überbrückend vorgesehen und zu beiden Seiten der Aussparung 12,13 im Grundkörper 11 festgelegt ist. Dabei ist beim dargestellten und insoweit bevorzugten Laufwagen 9 der Durchmesser der Laufrollen 14 nur geringfügig größer als der Durchmesser des Grundkörpers 11.

Bei dargestellten und insoweit bevorzugten Laufwagen 9 sind zwei Laufrollenpaare 16,17 vorgesehen. Jedes Laufrollenpaar 16,17 ist einem anderen Ende des Grundkörpers 11 zugeordnet. Zudem wird jedes Laufrollenpaar 16,17 durch zwei Laufrollen 14 gebildet, deren Drehachsen beim dargestellten und insoweit bevorzugten Laufwagen 9 einerseits im Wesentlichen senkrecht zur Längserstreckung des Laufwagens 9 verlaufen und andererseits um etwa 90° gegeneinander geneigt sind.

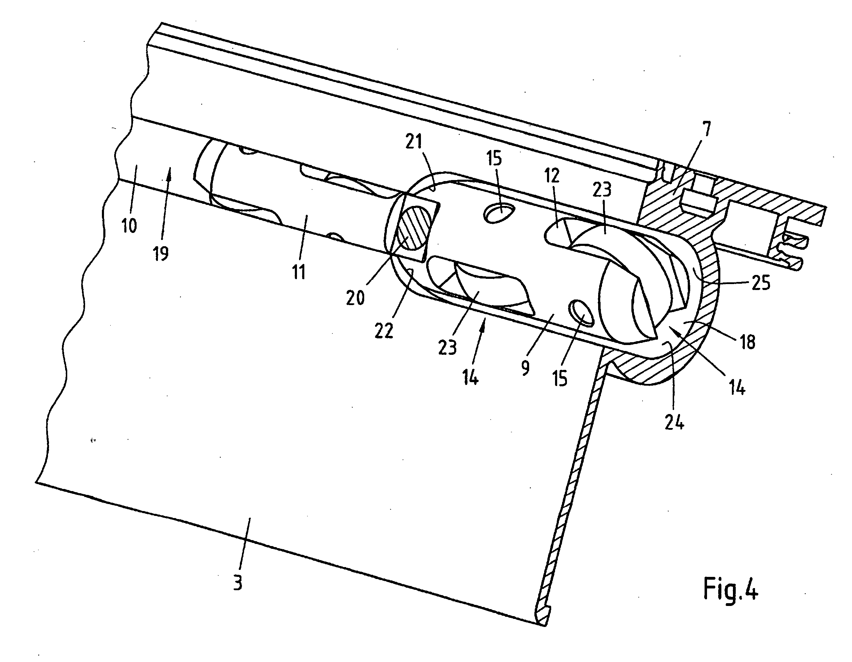

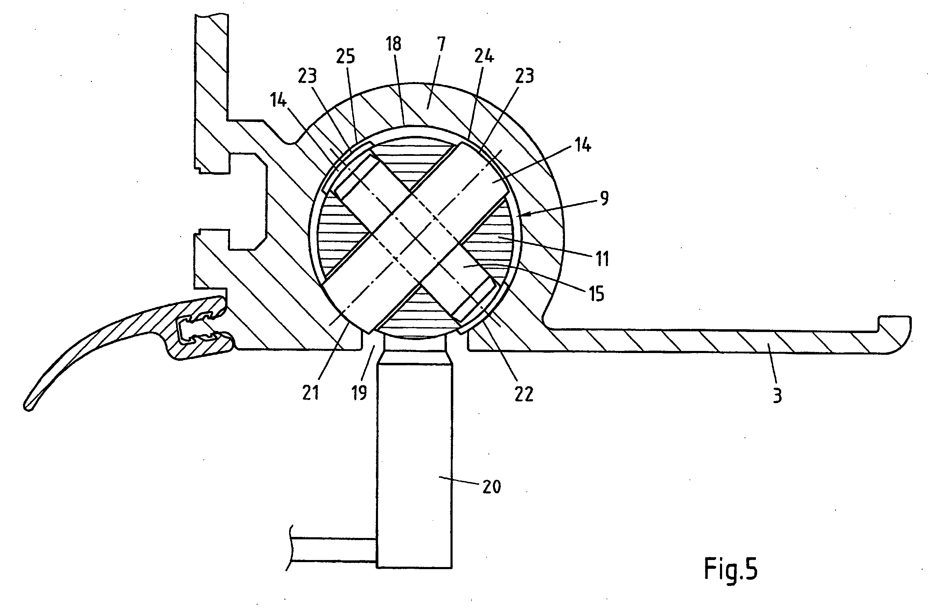

Der Laufwagen 9 ist beim dargestellten und insoweit bevorzugten Nutzfahrzeugaufbau 1 derart in die Laufschiene 10 des Dachs 3 eingesetzt und gehalten, wie dies in den Fig. 4 und 5 dargestellt ist. Die Laufschiene 10 im Dachholm 7 des Nutzfahrzeugaufbaus 1 weist einen kreisförmigen Querschnitt 18 auf. Dieser kreisförmige Querschnitt 18 ist nur in dem vertikal nach unten weisenden Teilbereich des Querschnitts unterbrochen. Diese Unterbrechung ist im Wesentlichen entlang der gesamten Laufschiene 10 vorgesehen und bildet in diese Richtung einen Schlitz 19 in der Laufschiene 10. Entlang dieses Schlitzes 19 kann das beim dargestellten und insoweit bevorzugten Nutzfahrzeugaufbau 1 stabförmig ausgebildete Verbindungselement 20 längs zur Laufschiene 10 verschoben werden, über das die am Laufwagen 9 aufgehängte Last in Form eines Paneels 6 der Seitenwand 2 mit dem Laufwagen 9 verbunden ist.

Die Laufrollen 14 bzw. deren Drehachsen sind in der in den Fig. 4 und 5 dargestellten Ausgangsstellung des Laufwagens 9 jeweils um etwa 45° gegenüber der Vertikalen geneigt. Dabei sind die Laufrollen 14 eines Laufrollenpaars 16,17 bzw. deren Drehachsen jeweils zu gegenüberliegenden Seiten der Vertikalen geneigt. Somit wird die Gewichtskraft der an dem Laufwagen 9 hängenden Last über beide Laufrollen 14 eines Laufrollenpaares 16,17 auf die Laufschiene 10 übertragen und zwar über die unteren Laufflächen 21,22 der Laufschiene 10, welche zu beiden Seiten des Schlitzes 19 der Laufschiene 10 vorgesehen sind. Die Laufflächen 23 der Laufrollen 14 des Laufwagens 9 sind ballig ausgebildet und weisen somit eine nach außen gewölbte Kontur auf. Die Krümmung der Laufflächen 23 der Laufrollen 14 entspricht dabei im Wesentlichen der Krümmung der Laufflächen 21,22,24,25 der Laufschiene 10 entlang derer die Laufflächen 23 der Laufrollen 14 abrollen.

Der Durchmesser der Laufrollen 14 ist beim dargestellten und insoweit bevorzugten Nutzfahrzeugaufbau 1 nur geringfügig kleiner als der Durchmesser des inneren Querschnitts 18 der Laufschiene 10, die, soweit der Schlitz 19 in der Laufschiene 10 unberücksichtigt bleibt, als einen kreisförmigen Querschnitt aufweisend angesehen werden kann. Daher gelangen die Laufflächen 23 der Laufrollen 14 des Laufwagens 9 bereits bei einem geringfügigen Anheben der Paneele 6 der Faltwand in Anlage an obere Laufflächen 24,25 der Laufschiene 10. Auch diese oberen Laufflächen 24,25 der Laufschiene 10 weisen im Wesentlichen die gleiche Krümmung auf wie die Laufflächen 23 der Laufrollen 14.

Bei der dargestellten und insoweit bevorzugten Laufschiene 10 bildet der innere Querschnitt 18 mit Ausnahme des unteren Schlitzes 19 einen Kreis mit einem konstanten Radius. Dieser Radius entspricht im Wesentlichen dem Radius der Krümmung der Laufflächen 23 der Laufrollen 14. Bei der dargestellten und insoweit bevorzugten Laufschiene 10 können folglich die Laufflächen 21,22,24,25 derselben als ineinanderübergehend angesehen werden.

Wenn ein Paneel 6 der Faltwand des dargestellten und insoweit bevorzugten Nutzfahrzeugaufbaus 1 in gewissem Maße frei schwingend an einem Laufwagen 9 montiert ist, kann das Paneel 6, etwa beim Öffnen oder Schließen der Seitenwand 2 nach innen oder nach außen gedrückt werden. Es wirkt dann ein Moment auf den in der Laufschiene 10 gehaltenen Laufwagen 9, das dazu führt, dass der Laufwagen 9 ausgehend von der in den Fig. 4 und 5 dargestellten Ausgangsstellung etwas um seine Mittelachse gedreht wird. Ein entsprechendes Verdrehen des Laufwagens 9 um dessen Mittelachse kann in beide Richtungen toleriert werden. Es werden auf diese Weise zwar die Laufrollen 14 des Laufwagens 9 aus der Ausgangsstellung verkippt bzw. zu einer Seite ausgelenkt. Die Laufflächen 23 der Laufrollen 14 bilden aber weiter mit der Laufschiene 10 eine verhältnismäßig breite Aufstandsfläche. Ein Verkeilen des Laufwagens 9 in der Laufschiene 10 folgt zudem ebenso wenig wie eine schleifende Anlage der Laufrolle 14 an der Laufschiene 10.

Beim dargestellten und insoweit bevorzugten System aus Laufschiene 10 und Laufwagen 9 verläuft die Mittellinie der Laufschiene 10 - wenn überhaupt - nur geringfügig beabstandet zur Mittellinie des Laufwagens 9. Deswegen und wegen der sonstigen Anpassung von Laufwagen 9 und Laufschiene 10 aneinander, bewirkt ein auf den Laufwagen 9 übertragenes Moment senkrecht zur Längserstreckung der Laufschiene 10 lediglich zu einem Verdrehen des Laufwagens 9 in der Laufschiene 10, ohne die Verschiebbarkeit des Laufwagens 9 jedoch nennenswert zu beeinträchtigen.

Nicht im Einzelnen dargestellt ist, dass die Laufschiene 10 im Wesentlichen über die gesamte Längserstreckung der Laufschiene 10, die beim dargestellten und insoweit bevorzugten Nutzfahrzeugaufbau etwa mit der Längserstreckung des Nutzfahrzeugaufbaus selbst übereinstimmt, einen konstanten inneren Querschnitt 1 aufweist. Der innere Querschnitt 18 der Laufschiene 10 bildet folglich einen in Längsrichtung gleichförmig ausgebildeten Zylindermantel, wobei der Zylinder einen konstanten Radius aufweist und wobei im Zylindermantel ein schmaler Spalt ausgespart ist. Diese Aussparung entspricht dem in den Fig. 4 und 5 dargestellten unteren Schlitz 19 in der Laufschiene 10.

Auf diesem Zylindermantel liegen die Laufflächen 14 der Laufschiene 10 nebeneinander, ohne dass diese klar gegeneinander abgegrenzt wären. In Ermangelung solch klarer Grenzen können die Laufflächen 21,22,24,25 der Laufschiene 10 als ineinander übergehend über dem Umfang des inneren Querschnitts 18 verteilt angesehen werden. Dabei wirken die Laufflächen 21,22,24,25 der Laufschiene 10 mit den Laufflächen 23 der Laufrollen 14 zusammen, die jeweils korrespondierend zueinander ausgebildet sind.

## Patentansprüche

1. Nutzfahrzeugaufbau (1) mit einem Dach (3) und einer dem Dach (3) zugeordneten Laufschiene (10), wobei in der Laufschiene (10) wenigstens ein Laufwagen (9) derart gehalten ist, um an den Laufwagen (9) angehängte Lasten entlang der Laufschiene (10) zu verfahren, wobei der Laufwagen (9) wenigstens zwei Laufrollen (14) aufweist, wobei die Laufrollen (14) jeweils mit einer an wenigstens einer Lauffläche (21,22) der Laufschiene (10) abrollend vorgesehen sind sowie eine Lauffläche (23) aufweisen,
wobei
die Laufflächen (23) der Laufrollen (14) und die Laufflächen (21,22) der Laufschiene (10) im Wesentlichen korrespondierend zueinander gesehen von den Laufrollen nach außen gewölbte Konturen aufweisen, wobei die Kontur der Laufflächen (23) der Laufrollen (14) konvex ist und die Kontur der Laufflächen (21,22) der Laufschiene (10) konkav ist,
**dadurch gekennzeichnet, dass** die Drehachsen der wenigstens zwei Laufrollen (14) des Laufwagens (9) gegeneinander geneigt sind.

2. Nutzfahrzeugaufbau nach Anspruch 1,
**dadurch gekennzeichnet, dass** die wenigstens eine Laufrolle (14) eine an zwei Laufflächen (21,24;22,25) der Laufschiene (10) abrollende Lauffläche (23) aufweist und dass die Lauffläche (23) der wenigstens einen Laufrolle (14) und die beiden Laufflächen (21,24;22,25) der Laufschiene im Wesentlichen korrespondierend zueinander nach außen gewölbte Konturen aufweisen.

3. Nutzfahrzeugaufbau nach Anspruch 1 oder 2,
**dadurch gekennzeichnet, dass** die Drehachsen der wenigstens zwei Laufrollen (14) des Laufwagens (9) um etwa 90° gegeneinander geneigt sind.

4. Nutzfahrzeugaufbau nach einem der Ansprüche 1 bis 3,
**dadurch gekennzeichnet, dass** wenigstens zwei Laufrollen (14)in einer Ausgangsstellung jeweils etwa 45° gegen die Vertikale geneigt sind.

5. Nutzfahrzeugaufbau nach einem der Ansprüche 1 bis 4,
**dadurch gekennzeichnet, dass** die Laufschiene (10) einen im Wesentlichen kreisförmigen, inneren Querschnitt (18) aufweist und dass die wenigstens eine Lauffläche (21,22,24,25) der Laufschiene auf dem inneren Querschnitt (18) angeordnet ist.

6. Nutzfahrzeugaufbau nach Anspruch 5,
**dadurch gekennzeichnet, dass** die Krümmung des inneren Querschnitts (18) und die Krümmung der Kontur der wenigstens einen Lauffläche (21,22,24,25) der Laufschiene (10) im Wesentlichen identisch sind.

7. Nutzfahrzeugaufbau nach Anspruch 5 oder 6,
**dadurch gekennzeichnet, dass** der im Wesentlichen kreisförmige, innere Querschnitt (18) der Laufschiene (10) durch Kreisbögen definiert wird, die den Laufflächen (21,22,24,25) der Laufschiene (10) und/oder in etwa den Laufflächen (23) der Laufrolle (14) entsprechen.

8. Nutzfahrzeugaufbau nach einem der Ansprüche 5 bis 7,
**dadurch gekennzeichnet, dass** der Mittelpunkt der wenigstens einen Laufrolle (14) des Laufwagens (9) im Wesentlichen auf der Mittellinie der Laufschiene (10) angeordnet ist.

9. Nutzfahrzeugaufbau nach einem der Ansprüche 1 bis 8,
**dadurch gekennzeichnet, dass** im Laufwagen (9) schlitzförmige Aussparungen (12,13) zur Aufnahme von Laufrollen (14) vorgesehen sind.

10. Nutzfahrzeugaufbau nach einem der Ansprüche 1 bis 9,
**dadurch gekennzeichnet, dass** die Laufschiene (10) einen im Wesentlichen vertikal nach unten weisenden, sich längs zur Laufschiene (10) erstreckenden Schlitz (19) zur Aufnahme eines Verbindungselements (20) zwischen dem Laufwagen (9) und der an den Laufwagen (9) angehängten Last aufweist.

11. Nutzfahrzeugaufbau nach einem der Ansprüche 1 bis 10,
**dadurch gekennzeichnet, dass** die wenigstens eine Laufschiene (10) in oder an einem seitlichen, sich vorzugsweise längs zum Nutzfahrzeugaufbau (1) erstreckenden, Dachholm (7) im Laderaum und/oder angrenzend zum Laderaum des Nutzfahrzeugaufbaus (1) vorgesehen ist.

12. Nutzfahrzeugaufbau nach einem der Ansprüche 1 bis 11,
**dadurch gekennzeichnete dass** an dem Laufwagen (9) ein Teil einer Seitenwand (2) des Nutzfahrzeugaufbaus (1), vorzugsweise einer Faltwand eines Kofferaufbaus eines Nutzfahrzeugs (N), aufgehängt ist.

13. Nutzfahrzeugaufbau nach einem der Ansprüche 1 bis 12,
**dadurch gekennzeichnet, dass** die Laufschiene vorzugsweise bündig in das Dachpaneel eines Kofferaufbaus eingelassen ist.

## Claims

1. Commercial vehicle body (1) having a roof (3) and a guide rail (10) assigned to the roof (3), wherein at least one carriage (9) is held in the guide rail (10) in such a way that loads attached to the carriage (9) can be moved along the guide rail (10), wherein the carriage (9) has at least two rollers (14), wherein the rollers (14) are provided rolling on at least one running surface (21, 22) of the guide rail (10) and in each case have a running surface (23), wherein the running surfaces (23) of the rollers (14) and the running surfaces (21, 22) of the guide rail (10) substantially corresponding to one another viewed from the rollers have outwardly curved contours, wherein the contour of the running surfaces (23) of the rollers (14) is convex and the contour of the running surfaces (21, 22) of the guide rail (10) is concave, **characterised in that** the rotational axes of the at least two rollers (14) of the carriage (9) are inclined with respect to one another.

2. Commercial vehicle body according to Claim 1, **characterised in that** the at least one roller (14) has a running surface (23) rolling on two running surfaces (21, 24; 22, 25) of the guide rail (10), and **in that** the running surface (23) of the at least one roller (14) and the two running surfaces (21, 24; 22, 25) of the guide rail substantially corresponding to one another have outwardly curved contours.

3. Commercial vehicle body according to Claim 1 or 2, **characterised in that** the rotational axes of the at least two rollers (14) of the carriage (9) are inclined by approximately 90° with respect to one another.

4. Commercial vehicle body according to any one of Claims 1 to 3, **characterised in that** at least two rollers (14) in a starting position in each case are inclined approximately 45° with respect to the vertical.

5. Commercial vehicle body according to any one of Claims 1 to 4, **characterised in that** the guide rail (10) has a substantially circular, inner cross section (18), and **in that** the at least one running surface (21, 22, 24, 25) of the guide rail (10) is arranged on the inner cross section (18).

6. Commercial vehicle body according to Claim 5, **characterised in that** the curvature of the inner cross section (18) and the curvature of the contour of the at least one running surface (21, 22, 24, 25) of the guide rail (10) are substantially identical.

7. Commercial vehicle body according to Claim 5 or 6, **characterised in that** the substantially circular, inner cross section (18) of the guide rail (10) is defined by arcs which correspond to the running surfaces (21, 22, 24, 25) of the guide rail (10) and/or approximately correspond to the running surfaces (23) of the roller (14).

8. Commercial vehicle body according to any one of Claims 5 to 7, **characterised in that** the centre point of the at least one roller (14) of the carriage (9) is substantially located on the centre line of the guide rail (10).

9. Commercial vehicle body according to any one of Claims 1 to 8, **characterised in that** slotted recesses (12, 13) are provided in the carriage (9) for accommodating rollers (14).

10. Commercial vehicle body according to any one of Claims 1 to 9, **characterised in that** the guide rail (10) has a slot (19), which points substantially vertically downwards and extends longitudinally to the guide rail (10), for accommodating a connection element (20) between the carriage (9) and the load attached to the carriage (9).

11. Commercial vehicle body according to any one of Claims 1 to 10, **characterised in that** the at least one guide rail (10) is provided in or on a lateral roof rail (7), preferably extending longitudinally to the commercial vehicle body (1), in the storage area and/or adjacent to the storage area of the commercial vehicle body (1).

12. Commercial vehicle body according to any one of Claims 1 to 11, **characterised in that** a part of a lateral wall (2) of the commercial vehicle body (1), preferably a folding partition of a box body of a commercial vehicle(N), is suspended from the carriage (9).

13. Commercial vehicle body according to any one of Claims 1 to 12, **characterised in that** the guide rail is preferably recessed flush into the roof panel of a box body.

## Revendications

1. Carrosserie de véhicule utilitaire (1) comportant un toit (3) et un rail de roulement (10) coordonné au toit (3), dans laquelle au moins un wagon (9) est maintenu dans le rail de roulement (10) de manière à déplacer les charges suspendues sur le chariot (9) le long du rail de roulement (10), dans laquelle le chariot (9) présente au moins deux galets de roulement (14), dans laquelle les galets de roulement (14) sont respectivement pourvus d'un se déroulant sur au moins une surface de roulement (21, 22) du rail de roulement (10) et présentent une surface de roulement (23), dans laquelle les surfaces de roulement (23) des rouleaux de roulement (14) et les surfaces de roulement (21, 22) du rail de roulement (10) présentent des contours incurvés vers l'extérieur, essentiellement correspondants l'un à l'autre vu à partir des galets de roulement, dans laquelle le contour des surfaces de roulement (23) des galets de roulement (14) est convexe et le contour des surfaces de roulement (21, 22) des rails de roulement (10) est concave, **caractérisée en ce que** les axes de rotation des au moins deux galets de roulement (14) du chariot (9) sont inclinés l'un contre l'autre.

2. Carrosserie de véhicule utilitaire selon la revendication 1, **caractérisée en ce que** au moins un galet de roulement (14) présente une surface de roulement (23) se déroulant sur deux surfaces de roulement (21, 24 ; 22, 25) des rails de roulement (10) et **en ce que** les surfaces de roulement (23) d'au moins un galet de roulement (14) et les deux surfaces de roulement (21, 24 ; 22, 25) des rails de roulement présentent des contours bombés vers l'extérieur, essentiellement correspondants l'un à l'autre.

3. Carrosserie de véhicule utilitaire selon les revendications 1 ou 2, **caractérisée en ce que** les axes de rotation des au moins deux galets de roulement (14) du wagon (9) sont inclinés l'un contre l'autre d'environ 90°.

4. Carrosserie de véhicule utilitaire selon une des revendications 1 à 3, **caractérisée en ce que** au moins deux galets de roulement (14) dans une position de départ sont inclinés contre la verticale de respectivement environ 45°.

5. Carrosserie de véhicule utilitaire selon une des revendications 1 à 4, **caractérisée en ce que** le rail de roulement (10) présente une section transversale intérieure (18), essentiellement circulaire et **en ce que** au moins une surface de roulement (21, 22, 24, 25) du rail de roulement est disposée sur la section transversale intérieure (18).

6. Carrosserie de véhicule utilitaire selon la revendication 5, **caractérisée en ce que** l'incurvation de la section transversale intérieure (18) et l'incurvation du contour d'au moins une surface de roulement (21, 22, 24, 25) du rail de roulement (10) sont essentiellement identiques.

7. Carrosserie de véhicule utilitaire selon les revendications 5 ou 6, **caractérisée en ce que** une section transversale intérieure (18), essentiellement circulaire du rail de roulement (10) est définie par des arcs de cercle, qui correspondent aux surfaces de roulement (21, 22, 24, 25) du rail de roulement (10) et/ou à approximativement les surfaces de roulement (23) du galet de roulement (14).

8. Carrosserie de véhicule utilitaire selon une des revendications 5 à 7, **caractérisée en ce que** le point central d'au moins un galet de roulement (14) du chariot (9) est disposé essentiellement sur la ligne médiane du rail de roulement (10).

9. Carrosserie de véhicule utilitaire selon une des revendications 1 à 8, **caractérisée en ce que** dans le chariot (9) des évidements en forme de fente (12, 13) sont prévus afin de recevoir des galets de roulement (14).

10. Carrosserie de véhicule utilitaire selon une des revendications 1 à 9, **caractérisée en ce que** le rail de roulement (10) présente une fente (19) s'étendant essentiellement verticalement en se dirigeant vers le bas, le long du rail de roulement (10) afin de recevoir un élément de liaison (20) entre le chariot (9) et la charge suspendue sur le chariot (9).

11. Carrosserie de véhicule utilitaire selon une des revendications 1 à 10, **caractérisée en ce que** au moins un rail de roulement (10) est prévu dans ou sur un montant de toit (7) latéral, s'étendant de préférence le long de la carrosserie de véhicule utilitaire (1) dans l'espace de chargement et/ou contigu à l'espace de chargement de la carrosserie de véhicule utilitaire (1).

12. Carrosserie de véhicule utilitaire selon une des revendications 1 à 11, **caractérisée en ce que** sur le chariot (9), une partie d'une paroi latérale (2) de la carrosserie de véhicule utilitaire (1), de préférence une cloison pliante d'un coffre d'un véhicule utilitaire (N), est suspendue.

13. Carrosserie de véhicule utilitaire selon une des revendications 1 à 12, **caractérisée en ce que** le rail de roulement est ménagé de préférence au ras du panneau de toiture d'un coffre.
